(19) Europäisches Patentamt
European Patent Office
Office européen des brevets

(11) **EP 2 468 570 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(51) Int Cl.:
***B60Q 11/00*** *(2006.01)*    ***H05B 37/03*** *(2006.01)*
***H05B 33/08*** *(2006.01)*

(21) Anmeldenummer: **11192732.3**

(22) Anmeldetag: **09.12.2011**

(54) **Verfahren zum Betreiben einer Beleuchtungseinrichtung eines Fahrzeugs**

Method for operating a lighting device of a vehicle

Procédé de fonctionnement d'un dispositif d'éclairage d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2010 DE 102010064220**

(43) Veröffentlichungstag der Anmeldung:
**27.06.2012 Patentblatt 2012/26**

(73) Patentinhaber: **Automotive Lighting Reutlingen GmbH**
**72762 Reutlingen (DE)**

(72) Erfinder:
• **Reichenecker, Thomas**
**72070 Tübingen (DE)**
• **Rauskolb, Dietmar**
**72762 Reutlingen (DE)**
• **Rosenstein, Filip**
**70619 Stuttgart (DE)**

(74) Vertreter: **DREISS Patentanwälte PartG mbB**
**Postfach 10 37 62**
**70032 Stuttgart (DE)**

(56) Entgegenhaltungen:
EP-A1- 2 080 667     DE-A1-102005 051 212
DE-A1-102008 047 731

EP 2 468 570 B1

## Beschreibung

Die Erfindung betrifft ein Verfahren zum Betreiben einer Beleuchtungseinrichtung eines Fahrzeugs, insbesondere eines Kraftfahrzeugs. Die Beleuchtungseinrichtung umfasst mindestens eine Halbleiterlichtquelle, insbesondere eine Leuchtdiode, die mittels eines pulsweitenmodulierten Signals mit einem vorgebbaren Tastverhältnis zwischen Impulsdauer und Periodendauer betrieben wird. Die Halbleiterlichtquelle durchläuft zu vorgebbaren Zeitpunkten eine Diagnose, wobei die Halbleiterlichtquelle während der gesamten Dauer der Diagnose mit einem Impuls des pulsweitenmodulierten Signals beaufschlagt ist. Während der Diagnose wird die Halbleiterlichtquelle in einem von einem Normalbetrieb der Halbleiterlichtquelle abweichenden Diagnosebetrieb betrieben.

Außerdem betrifft die Erfindung ein Steuergerät einer Beleuchtungseinrichtung nach dem Oberbegriff des Anspruchs 6 sowie eine Beleuchtungseinrichtung eines Fahrzeugs nach dem Oberbegriff des Anspruchs 8.

Aus dem Stand der Technik sind verschiedenartige Beleuchtungseinrichtungen für Fahrzeuge bekannt. In DE 10 2008 047731 A1 werden die Messdauer im Diagnosebetrieb an die Einschaltdauer des PWM-Signals angepasst, um Messungen in instabilen Schaltzustände zu vermeiden. Die DE 10 2005 051212 A1 schlägt ein Verfahren zur Überwachung der Funktion eines Leuchtkörpers vor, dessen mittlere Helligkeit über das Verhältnis der Dauer von Leuchtphasen und Dunkelphasen modulierbar ist. So unterscheidet man zwischen Scheinwerfern und Leuchten. Scheinwerfer sind ausschließlich im Frontbereich eines Fahrzeugs angeordnet. Sie dienen neben einer Erhöhung der Verkehrssicherheit durch eine Sichtbarmachung des Fahrzeugs für andere Verkehrsteilnehmer insbesondere der Ausleuchtung der Fahrbahn vor dem Fahrzeug, insbesondere in Form von Abblendlicht, Fernlicht, Nebellicht oder einer beliebig anderen Lichtverteilung, um die Sicht für den Fahrer zu verbessern. Scheinwerfer können als Lichtquelle eine oder mehrere Glühlampen, Gasentladungslampen oder Halbleiterlichtquellen, z.B. Leuchtdioden, aufweisen. Die Scheinwerfer umfassen mindestens ein Lichtmodul, das nach einem Reflexionsprinzip oder nach einem Projektionsprinzip arbeitet. Beim Reflexionsprinzip verfügt das Lichtmodul über einen zur Lichtquelle hin verspiegelten Reflektor, wobei das von der Lichtquelle ausgesandte Licht zur Erzeugung der gewünschten Lichtverteilung auf die Fahrbahn vor das Fahrzeug reflektiert wird. Zur Erzeugung einer Helldunkelgrenze der erzeugten Lichtverteilung kann der Reflektor in entsprechender Weise ausgebildet sein, dass er entweder alleine oder mit einem zusätzlichen Blendenelement die Lichtverteilung mit der Helldunkelgrenze erzeugt. Ein nach dem Projektionsprinzip arbeitendes Lichtmodul verfügt zusätzlich über eine Projektionslinse, welche das reflektierte Licht zur Erzeugung der gewünschten Lichtverteilung auf die Fahrbahn vor das Fahrzeug projiziert. Zur Erzeugung einer Helldunkelgrenze der resultierenden Lichtverteilung ist zwischen dem Reflektor und der Linse eine Blendenanordnung angeordnet, deren Oberkante (bei einer vertikalen stehenden Blendenanordnung) bzw. deren Vorderkante (bei einer horizontal liegenden Blendenanordnung) durch die Linse als Helldunkelgrenze auf die Fahrbahn vor das Fahrzeug projiziert wird.

Leuchten dienen überwiegend der Verkehrssicherheit durch Sichtbarmachung des Fahrzeugs für andere Verkehrsteilnehmer. So werden Bugleuchten im Frontbereich des Fahrzeugs bspw. als Positionslicht, Blinklicht oder Tagfahrlicht und Heckleuchten im Heckbereich des Fahrzeugs bspw. als Bremslicht, Rücklicht, Blinklicht, Positionslicht oder Rückfahrlicht eingesetzt. Die Bugleuchten können dabei im Scheinwerfer integriert sein, sie können aber auch als separate Leuchten ausgebildet sein. Es ist denkbar, dass sie zur Realisierung mehrerer Leuchtenfunktionen ausgebildet sind. In einer Heckleuchte sind üblicherweise mehrere Leuchtenfunktionen integriert. Als Lichtquellen weisen Leuchten üblicherweise Glühlampen oder Halbleiterlichtquellen, z.B. Leuchtdioden, auf und arbeiten bevorzugt nach dem Reflexionsprinzip. Sie verfügen also üblicherweise über einen Reflektor, der das Licht der Lichtquelle so reflektiert, dass die austretenden Lichtstrahlen in Lichtaustrittsrichtung der Beleuchtungseinrichtung eine gewünschte Lichtverteilung erzeugen.

Beleuchtungseinrichtungen, die mit Halbleiterlichtquellen bestückt sind, können nach dem Stand der Technik mittels Pulsweitenmodulation (PWM) betrieben werden. Die Pulsweitenmodulation ist eine Modulationsart, bei der eine technische Größe (z.B. ein elektrischer Strom) periodisch zwischen zwei Werten wechselt. Dabei wird in der Regel bei konstanter Frequenz ein Tastverhältnisses des Signals verändert, wobei das Tastverhältnis als ein Quotient aus einer Impulsdauer und einer Periodendauer (Impulsdauer plus Impulslücke) definiert ist. Durch Variation des Tastverhältnisses des PWM-modulierten Signals kann der Betriebspunkt der Halbleiterlichtquellen zumindest zeitweise zur Einstellung einer mittleren Leistung verändert werden, bspw. zur Veränderung der Helligkeit des von den Halbleiterlichtquellen emittierten Lichts.

Dabei ist zu berücksichtigen, dass der durch die Halbleiterlichtquelle fließende Strom während des PWM-Betriebs mit einer Frequenz periodisch ein- und ausgeschaltet wird, die größer ist als eine Grenzfrequenz einer dynamischen, visuellen Empfindlichkeit des menschlichen Auges. Die Grenzfrequenz des menschlichen Auges liegt bei etwa 50Hz. D.h., für Schaltfrequenzen oberhalb dieser Grenze nimmt das menschliche Auge eine gleichmäßige dem Tastverhältnis des Schaltvorgangs entsprechende Helligkeit des emittierten Lichts wahr, während das Auge für Schaltfrequenzen unterhalb dieser Grenzfrequenz Helligkeitsschwankungen (z.B. ein Flackern des Lichts) wahrnimmt. Die Helligkeitsschwankungen werden umso stärker wahrgenommen, je niedriger die Schaltfrequenz ist.

Auf diese Weise kann bei Modulationsfrequenzen des pulsweitenmodulierten Signals bzw. Betriebsstroms von oberhalb etwa 50 Hz durch Variation des Tastverhältnisses für einen menschlichen Betrachter wahrnehmbar die Helligkeit der Beleuchtungseinrichtung stufenlos eingestellt werden, da ein Mittelwert des Betriebsstromsignals für die Helligkeit maßgebend ist. Ebenso kann mit dem PWM-Betrieb durch Verringern des Tastverhältnisses die in der Beleuchtungseinrichtung umgesetzte mittlere Leistung stufenlos verringert werden. Dies wird in bestimmten Situationen (z. B. bei hohen Umgebungstemperaturen) zur Leistungsbegrenzung genutzt, um die von der Halbleiterlichtquelle während des Betriebs abgegebene Wärme zu reduzieren und Bauteile (z. B. Elektronik, Kunststoffgehäuse) in der Umgebung der Beleuchtungseinrichtung vor Fehlfunktion oder Zerstörung durch Überhitzung zu schützen.

Typische Frequenzen eines pulsweitenmodulierten Signals zum Betreiben einer Halbleiterlichtquelle einer Beleuchtungseinrichtung eines Kraftfahrzeugs liegen im Bereich von etwa 100 bis 400Hz. Diese werden nach dem Stand der Technik während des Betriebs der Halbleiterlichtquelle konstant gehalten. Zum Verändern des Betriebspunktes der Halbleiterlichtquelle wird nur das Tastverhältnis der PWM-Signale verändert. Das Tastverhältnis wird abhängig von den technischen Eigenschaften der Halbleiterlichtquellen (z.B. der Helligkeit des emittierten Lichts beim Betriebsstrom) eingestellt. Bei einer Realisierung von Positionslicht und Parklicht liegen typische Tastverhältnisse derzeit im Bereich von 4 bis 10% (d.h. die Impulsdauer beträgt etwa 4-10% der Periodendauer), während sie bei Tagfahrlicht und/oder Blinklicht bei bis zu 100% liegen können, da hier eine größere Helligkeit des emittierten Lichts gefordert wird, wobei auch hier zur Anpassung der Helligkeit oder zur Leistungsbegrenzung auch Tastverhältnisse unter 100% zur Anwendung kommen.

Ein wesentlicher Vorteil der PWM-Dimmung im Vergleich zu einer analogen Stromdimmung (Reduktion der Amplitude eines kontinuierlichen Betriebsstroms) liegt im Erhalt der Lichtfarbe (Farbort in einem Farbraum). D.h., mit PWM-Dimmung kann die Helligkeit der Leuchte ohne Veränderung der Farbe des emittierten Lichts eingestellt werden. Dies ist insbesondere bei einer Beleuchtungseinrichtung für ein Kraftfahrzeug wichtig, da eine Farbänderung des ausgesandten Lichts zu einer Irritation des Fahrers und anderer Verkehrsteilnehmer führen würde. Es wäre sogar denkbar, dass es aufgrund einer Farbänderung des ausgesandten Lichts zu einer Verkehrsgefährdung kommen könnte, bspw. wenn von anderen Verkehrsteilnehmern ein Positionslicht (weiß) oder ein Bremslicht (rot) aufgrund einer Farbänderung des ausgesandten Lichts als Blinklicht (gelb, orange, bernsteinfarben) interpretiert würde.

Wenn eine Beleuchtungseinrichtung im PWM-Betrieb (d.h. mit einem Tastverhältnis <100%) eingeschaltet wird, ergibt sich häufig das Problem, dass die optische Wahrnehmbarkeit des Einschaltvorgangs nicht projektspezifischen bzw. kundenspezifischen Anforderungen genügt. So kann bspw. beim Einschalten einer Halbleiterlichtquelle, die mit einem PWM-Signal betrieben wird, funktionsbedingt ein Aufblitzen bzw. ein blitzähnlicher Effekt erzeugt werden. Dies kann von Fahrzeugherstellern wie von Fahrern des Kraftfahrzeugs oder anderen Verkehrsteilnehmern als störend empfunden werden. Manchmal ist dieser Effekt jedoch - je nach Einstellung des Fahrzeugherstellers - auch erwünscht. Grund für den Effekt ist eine Diagnose der Halbleiterlichtquelle unmittelbar nach dem Einschalten. Im Rahmen der Diagnose werden grundsätzliche Betriebsfunktionen der Halbleiterlichtquelle (z. B. eine Strom- und Spannungswerte auf Plausibilität zur Erkennung von Kurzschlüssen, Batterieschlüssen oder Leitungsbrüchen) überprüft.

Während der Dauer der Diagnose muss die Halbleiterlichtquelle kontinuierlich bestromt sein. Dies kann bspw. durch Beaufschlagen der Halbleiterlichtquelle mit einem Impuls eines PWM-Signals erzielt werden. Dazu muss in der Regel jedoch die Impulsdauer verlängert werden, was zu einer Erhöhung des Tastverhältnisses während der Diagnose führt. Dies kann zu dem beschriebenen Effekt führen. Um den blitzähnlichen Effekt zu vermeiden, wäre es theoretisch möglich, die Diagnosedauer zu reduzieren, um das Tastverhältnis zu verringern, vorzugsweise auf Werte wie sie auch während des Normalbetriebs auftreten. Dies hat jedoch zur Folge, dass der Funktionsumfang der Diagnose verringert wird, d.h. unter Umständen nicht alle notwendigen Schritte für eine vollständige Diagnose der Halbleiterlichtquellen durchlaufen werden können.

Zudem kann sogar der Fall auftreten, dass selbst die maximal mögliche Impulsdauer eines PWM-Signals bei einem Tastverhältnis von knapp unter 100% unter Umständen nicht ausreicht, um die gesamte Diagnose der Halbleiterlichtquelle darin unterzubringen. Die Frequenz eines PWM-Signals liegt - wie gesagt - typischerweise zwischen 100 und 400Hz, das heißt die Periodendauer liegt zwischen 2,5 und 10ms. Die maximal mögliche Impulsdauer liegt also bei herkömmlichen PWM-Signalen bei unter 2,5 bis unter 10ms. Je nach Umfang der Diagnose kann diese auch mehr als 10ms dauern. Um auch bei höheren Frequenzen noch eine Diagnose der Halbleiterlichtquellen während einer einzigen Periode des PWM-Signals durchführen zu können, muss der Umfang der Diagnose reduziert werden, um die Dauer der Diagnose zu verringern. Im Stand der Technik kann also die Diagnose der Halbleiterlichtquellen insbesondere bei höheren Frequenzen des PWM-Signals nur in einem begrenzten Umfang realisiert werden. Alternativ zur Diagnose mit dem Betriebsstrom der Halbleiterlichtquelle könnte die Diagnose theoretisch auch mit reduziertem Strom erfolgen, wobei die Stromstärke so niedrig ist, dass die Halbleiterlichtquelle praktisch kein optisch wahrnehmbares Licht aussendet (Glimmen). Dies hat jedoch den Nachteil einer Einschaltverzögerung und ggf. von Einschränkungen der Diagnoseergebnisse (z. B. verzögerte Diagnose defekter Halbleiterlichtquellen).

Aus der DE 10 2008 047 731 A1 ist eine gattungsgemäße Beleuchtungseinrichtung eines Kraftfahrzeugs und ein entsprechendes Verfahren zu ihrem Betrieb bekannt. Auch die DE 10 2005 051 212 A1 zeigt eine ähnliche Beleuchtungseinrichtung und ein entsprechendes Verfahren zu ihrem Betrieb.

Vor diesem Hintergrund besteht die Aufgabe der vorliegenden Erfindung darin, ein Verfahren zum Betreiben einer Beleuchtungseinrichtung zu schaffen, bei dem eine vollständige Diagnose der durch Pulsweitenmodulation betriebenen Halbleiterlichtquellen möglich ist und dabei die Halbleiterlichtquelle mit kontrollierter Intensität ohne Einschränkungen der gewünschten Funktionalität oder Leistungsfähigkeit betreiben zu können.

Zur Lösung der Aufgabe wird ausgehend von dem Verfahren der eingangs genannten Art vorgeschlagen, dass die Diagnose der Halbleiterlichtquelle unmittelbar nach einem Einschalten der Beleuchtungseinrichtung ausgeführt wird und dass während des Diagnosebetriebs die Periodendauer des pulsweitenmodulierten Signals größer gewählt wird als die Periodendauer während des Normalbetriebs, wobei das Tastverhältnis des pulsweitenmodulierten Signals während des Diagnosebetriebs gleich groß wie das Tastverhältnis während des Normalbetriebs der Halbleiterlichtquelle gewählt wird. Das erfindungsgemäße Verfahren ist vorzugsweise als ein Computerprogramm realisiert, das zur Ausführung sämtlicher Schritte des Verfahrens programmiert ist und auf einem Rechengerät, insbesondere auf einem Prozessor eines Steuergeräts abläuft. Bei dem Steuergerät handelt es sich vorzugsweise um ein Steuergerät, das der Beleuchtungseinrichtung zugeordnet ist, welche die Halbleiterlichtquelle umfasst. In dem Steuergerät ist also sowohl der Normalbetrieb als auch der Diagnosebetrieb der mindestens einen Halbleiterlichtquelle realisiert.

Das bedeutet, dass zum Betreiben der Halbleiterlichtquelle ein pulsweitenmoduliertes (PWM) Signal mit mindestens zwei verschiedenen Periodendauern und damit auch zwei verschiedenen Frequenzen verwendet wird. Insbesondere hat das PWM-Signal während des Normalbetriebs eine erste Periodendauer bzw. Frequenz und während eines Diagnosebetriebs eine zweite Periodendauer bzw. Frequenz. Sowohl im Normalbetrieb als auch im Diagnosebetrieb kann das Tastverhältnis innerhalb der Perioden - wie bei einer Pulsweitenmodulation üblich - variiert werden. Während die Frequenz des PWM-Signals im Normalbetrieb üblicherweise zwischen 100 und 400Hz liegt, kann die Frequenz im Diagnosebetrieb erfindungsgemäß auf bis zu etwa 50Hz verringert werden. In einer derart längeren Periodendauer lassen sich auch längere Impulse des PWM-Signals unterbringen, ohne dass das Tastverhältnis während des Diagnosebetriebs gegenüber dem im Normalbetrieb vor dem Übergang in den Diagnosebetrieb vorhandenen Tastverhältnis so weit abweichen würde, dass es beim Übergang von dem Normalbetrieb in den Diagnosebetrieb zu Intensitätsschwankungen des von der mindestens einen Halbleiterlichtquelle ausgesandten Lichts kommen kann. Ferner kann durch die nunmehr mögliche Verlängerung der Impulsdauer auch die Dauer der Diagnose verlängert und damit der Umfang der Diagnose vergrößert werden, so dass eine vollumfängliche detaillierte Diagnose der mindestens einen Halbleiterlichtquelle möglich ist.

Das PWM-Signal ist bevorzugt ein Betriebsstrom der Halbleiterlichtquelle. Die Diagnose der Halbleiterlichtquelle kann zu beliebigen Zeitpunkten ausgeführt werden. Die Diagnose kann insbesondere unmittelbar nach einem Einschalten der Beleuchtungseinrichtung oder aber zu bestimmten Zeitpunkten während des Normalbetriebs der Beleuchtungseinrichtung aktiviert werden. Dabei kann der Diagnose wesentlich mehr Zeit zugeordnet werden als dies bisher möglich war. Insbesondere kann der Diagnose so viel Zeit zugeordnet werden, dass eine vollständige Diagnose der Halbleiterlichtquelle möglich ist. Während der vorgesehenen Zeit wird die mindestens eine Halbleiterlichtquelle bestromt, d.h. während der Diagnose kann die Halbleiterlichtquelle bereits Licht aussenden. Die Impulsdauer bzw. die Periodendauer wird im Diagnosebetrieb so vorgegeben, dass sich ein gewünschtes Tastverhältnis ergibt. Das Tastverhältnis im Diagnosebetrieb wird vorzugsweise im Vergleich zu dem Tastverhältnis im Normalbetrieb vorgegeben. Ein in etwa gleich bleibendes Tastverhältnis im Normalbetrieb und im Diagnosebetrieb bewirkt keine erkennbare Intensitätsänderung des von der mindestens einen Halbleiterlichtquelle ausgesandten Lichts. Eine deutliche Erhöhung des Tastverhältnisses im Diagnosebetrieb gegenüber dem Tastverhältnis im Normalbetrieb führt zu einem Aufblitzen des Lichts. Durch die Vorgabe des Tastverhältnisses im Diagnosebetrieb ist eine bedarfsgesteuerte optische Wahrnehmbarkeit des blitzartigen Effekts während der Diagnose möglich.

Das erfindungsgemäße Verfahren bietet den Vorteil, dass eine umfassende Diagnose der Halbleiterlichtquelle unter Einbeziehung aller Fehlfunktionsmöglichkeiten möglich ist und dadurch größtmöglicher Schutz vor etwaigen negativen Auswirkungen von Fehlfunktionen (z.B. Blendung, Zerstörung von Bauteilen, Brand, Kurzschluss, etc.) gewährleistet wird. Außerdem kann der blitzähnliche Effekt kontrolliert werden, so wie es der Kunde (z.B. Fahrzeughersteller oder Endkunde) wünscht. So können wahlweise Kundenwünsche nach einem eher konservativ seriösen und damit ruhigen Erscheinungsbild der Beleuchtungseinrichtung durch eine weitgehende Unterdrückung des blitzähnlichen Effekts, genauso wie ein sportlich dynamisches und eher extrovertiertes Erscheinungsbild durch ein Hervorheben des blitzähnlichen Effekts erfüllt werden.

Die Diagnose der Halbleiterlichtquelle wird unmittelbar nach einem Einschalten der Beleuchtungseinrichtung ausgeführt. Dadurch wird die ordnungsgemäße Funktion der Halbleiterlichtquelle regelmäßig und frühzeitig, d.h. vor dem eigentlichen Betrieb der Halbleiterlichtquelle, überprüft. Da während der Diagnose Betriebsstrom an der Halbleiterlichtquelle anliegt, emittiert sie bereits während der Diagnosephase Licht, was ein schnelles Einschalten der Lichtquelle ermöglicht. Selbstverständlich ist es auch möglich, dass der Diagnosebetrieb von Zeit zu Zeit während des Normalbetriebs der Halbleiterlichtquelle aktiviert wird. Das ist problemlos möglich, da es nicht zu einem Erlöschen des Lichts im Diagnosebetrieb kommt, da die Halbleiterlichtquelle während des Diagnosebetriebs mit Betriebsstrom beaufschlagt wird.

Ein Einschalten der Beleuchtungseinrichtung bzw. der mindestens einen Halbleiterlichtquelle erfolgt bspw.

durch Betätigen eines Schaltelements (z.B. eines Lichtschalters bzw. Bremspedalschalters) durch den Fahrer z.B. zum Einschalten von Fernlicht, Abblendlicht, Positionslicht, Rücklicht, Bremslicht, etc. Ferner kann ein Einschalten der Halbleiterlichtquelle automatisch durch eine Betätigung des Zündschalters (z.B. für Tagfahrlicht) oder durch Einlegen eines Rückwärtsgangs (z.B. für Rückfahrlicht) erfolgen. Schließlich kann durch Aktivieren eines Schalters (z.B. eines Blinklichtschalters) die Halbleiterlichtquelle (z.B. bei Blinklicht oder Warnblinklicht) in einen bestimmten Takt so lange periodisch aktiviert und deaktiviert werden, bis der Schalter wieder deaktiviert wird. Es ist denkbar, dass bei jedem Einschalten (Aufleuchten) des Blinklichts eine Diagnose der Halbleiterlichtquelle durchgeführt wird. Bei jedem Aufleuchten kann dabei der blitzähnliche Effekt verstärkt erzeugt (durch Erhöhen des Tastverhältnisses gegenüber dem Normalbetrieb) bzw. unterdrückt werden (durch ein annähernd gleich großes Tastverhältnis wie im Normalbetrieb). Es ist auch denkbar, dass erst nach mehrmaligem Aufleuchten des Blinklichts eine Diagnose durchgeführt wird. Dies reduziert Ressourcen im Steuergerät.

Bei kontinuierlich leuchtenden und eher länger andauernden Lichtfunktionen, wie z.B. Abblendlicht, Basis-Abblendlicht (bei einem aus Basis-Lichtverteilung und Spot-Lichtverteilung zusammengesetzten Abblendlicht), Tagfahrlicht, Positionslicht, Rücklicht, etc ist es möglich, dass während des Normalbetriebs der Halbleiterlichtquelle zur Diagnose der Halbleiterlichtquelle von Zeit zu Zeit vorübergehend in den Diagnosebetrieb umgeschaltet wird. Das bedeutet, dass zu einem beliebigen Zeitpunkt eine Diagnose der mindestens einen Halbleiterlichtquelle durchgeführt werden kann, um deren Funktionsfähigkeit zu überprüfen. Das Auslösen des Diagnosebetriebs kann zeit- und/oder ereignisgesteuert sein. Die Diagnose kann dabei die gleichen Prüfschritte wie beim Einschalten der Halbleiterlichtquelle umfassen. Im Fall eines gelegentlichen Umschaltens in den Diagnosebetrieb während des laufenden Normalbetriebs wird der blitzähnliche Effekt wohl eher unterdrückt werden, da ein unvermitteltes Aufblitzen während des Normalbetriebs auf den Fahrer des Kraftfahrzeugs und andere Verkehrsteilnehmer störend und irritierend wirkt.

Um den Kundenwunsch nach einem unterdrückten bzw. kaum sichtbaren blitzähnlichen Effekt zu erfüllen, ist es zweckmäßig, dass das Tastverhältnis des pulsweitenmodulierten Signals während des Diagnosebetriebs im Bereich des Tastverhältnisses während des Normalbetriebs der Halbleiterlichtquelle gewählt wird. Idealerweise und daher bevorzugt wird das Tastverhältnis des pulsweitenmodulierten Signals während des Diagnosebetriebs gleich groß wie das Tastverhältnis während des Normalbetriebs der Halbleiterlichtquelle gewählt. Da mit größer werdendem Tastverhältnis die optische Wahrnehmbarkeit des blitzähnlichen Effekts immer größer wird, wird angestrebt, dass das Tastverhältnis des pulsweitenmodulierten Signals während des Diagnosebetriebs höchstens doppelt so groß wie das Tastverhältnis während des Normalbetriebs der Halbleiterlichtquelle gewählt wird. Bei einem Tastverhältnis des Normalbetriebs von 50% und mehr darf das Tastverhältnis für den Diagnosebetrieb gegenüber dem Tastverhältnis des Normalbetriebs allerdings allenfalls noch geringfügig, idealerweise gar nicht angehoben werden, um die optische Wahrnehmbarkeit des blitzähnlichen Effekts zu unterdrücken.

Um den Kundenwunsch nach einem deutlich wahrnehmbaren blitzähnlichen Effekt zu erfüllen, ist es zweckmäßig, dass das Tastverhältnis des pulsweitenmodulierten Signals während des Diagnosebetriebs deutlich größer gewählt wird als das Tastverhältnis während des Normalbetriebs. Das erhöhte Tastverhältnis des Diagnosebetriebs kann dabei entweder durch eine Verlängerung der Impulsdauer oder durch eine Verkürzung der Impulslücke oder durch die Kombination beider Maßnahmen erreicht werden. Vorzugsweise wird in diesem Fall das Tastverhältnis im Diagnosebetrieb auf mindestens das dreifache des Tastverhältnisses im Normalbetrieb erhöht. Auch hier hängt jedoch der Faktor der Erhöhung des Tastverhältnisses im Diagnosebetrieb von dem gewählten Tastverhältnis im Normalbetrieb ab.

Die vollständige Diagnose der Halbleiterlichtquelle wird während lediglich einer Periode des pulsweitenmodulierten Signals ausgeführt. Das bedeutet, dass die Impulsdauer des pulsweitenmodulierten Signals im Diagnosebetrieb mindestens so lang definiert ist, bis die Diagnose der Halbleiterlichtquelle (derzeit ca. 5ms) beendet ist. Selbstverständlich kann mit der Erfindung auch eine längere Diagnosedauer realisiert werden. Die Diagnose kann also unterbrechungsfrei vollständig ausgeführt werden. Durch Festlegen der anschließenden Impulslücke kann prinzipiell jedes Tastverhältnis des pulsweitenmodulierten Signals während des Diagnosebetriebs realisiert werden, um den blitzähnlichen Effekt entsprechend des Kundenwunsches zu behandeln (ohne oder mit diesem Effekt; mit schwächerem oder stärkerem Effekt). Dabei wird eine größtmögliche Sicherheit gegen Fehldiagnose gewährleistet, da keine Beeinflussung der Diagnose durch eine Unterbrechung der Diagnose durch eine Impulslücke zwischen einer Periode und der nächsten gegeben sind.

Bei der vorliegenden Erfindung sollte die Frequenz des pulsweitenmodulierten Signals während des Diagnosebetriebs nicht unterhalb einer bestimmten Grenzfrequenz gewählt werden, ab der das menschliche Auge die Impulse und die Impulslücken als Flackern des Lichts wahrnehmen kann. Die Grenzfrequenz wird durch die dynamische, visuelle Empfindlichkeit des menschlichen Auges bestimmt. Sie liegt etwa bei 50Hz, was einer maximalen Periodendauer während des Diagnosebetriebs von etwa 0,02s bzw. 20ms entspricht. Eine Begrenzung der Frequenz nach unten bzw. der Periodendauer nach oben kann bspw. durch ein zeitliches Begrenzen der Impulslücke erzielt werden, so dass die Frequenz des Diagnosebetriebs mindestens bei der Grenzfrequenz liegt. Das führt zwar zu einem Anstieg des Tastverhältnisses, was aber in gewissen Grenzen tolerierbar ist. So lange das Tastverhältnis während des Diagnosebetriebs in etwa dem Tastverhältnis während des Normalbetriebs entspricht, ist für den Betrachter kein übermäßiges Aufblitzen des von der mindestens einen Halbleiterlichtquelle emittierten Lichts zu erkennen. Das Tastverhältnis während des Diagnosebetriebs kann sogar bis auf etwa das Doppelte des Tastverhältnisses während des Normalbetriebs ansteigen, ohne dass ein subjektiv störendes Aufblitzen des Lichts erkennbar wäre. Ferner ist es denkbar, dass in bestimmten Anwendungsbeispielen ein Aufblitzen des Lichts während der Diagnosephase gewünscht ist, so dass in diesen Fällen das Tastverhältnis sogar so weit erhöht werden kann, dass ein deutliches Aufblitzen des Lichts erkennbar ist. Dies kann bspw. dadurch erreicht werden, dass das Tastverhältnis während des Diagnosebetriebs mindestens dreimal so groß ist wie das Tastverhältnis während des Normalbetriebs.

Weitere Merkmale und Vorteile der Erfindung ergeben sich aus den abhängigen Ansprüchen, der Beschreibung und den beigefügten Figuren. Es versteht sich, dass die vorstehend genannten und die nachstehend noch zu erläuternden Merkmale nicht nur in der jeweils angegebenen Kombination, sondern auch in anderen Kombinationen oder in Alleinstellung einen wesentlichen Aspekt der Erfindung darstellen können. Die Figuren zeigen bevorzugte Ausführungsbeispiele der Erfindung und werden in der nachfolgenden Beschreibung näher erläutert. Dabei zeigen:

Fig. 1    eine schematische Ansicht einer erfindungsgemäßen Beleuchtungseinrichtung eines Kraftfahrzeugs mit Halbleiterlichtquellen in einem Längsschnitt gemäß einem bevorzugten Ausführungsbeispiel;

Fig. 2    eine schematische Ansicht einer mit Halbleiterlichtquellen bestückten erfindungsgemäßen Beleuchtungseinrichtung eines Kraftfahrzeugs gemäß einem weiteren bevorzugten Ausführungsbeispiel;

Fig. 3    einen Verlauf eines pulsweitenmodulierten Signals zum Betreiben der Halbleiterlichtquelle aus den Figuren 1 und 2 während eines Einschaltvorgangs; und

Fig. 4    ein Ablaufdiagramm des erfindungsgemäßen Verfahrens gemäß einem bevorzugten Ausführungsbeispiel.

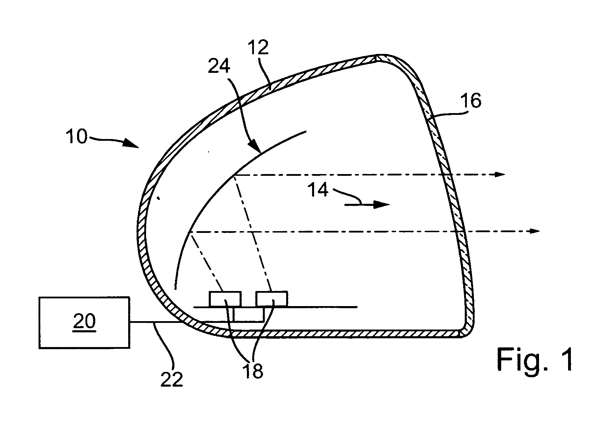

Figur 1 zeigt eine Beleuchtungseinrichtung 10 eines Kraftfahrzeugs in einem Längsschnitt. Die Beleuchtungseinrichtung 10 kann als ein Scheinwerfer oder als eine Leuchte ausgebildet sein und kann eine oder mehrere Lichtfunktionen erzeugen, wie z.B. Fernlicht, Abblendlicht und/oder Nebellicht in einem Scheinwerfer oder z.B. Positionslicht, Blinklicht und/oder Tagfahrlicht in einer Bugleuchte oder z.B. Bremslicht, Rücklicht Blinklicht, Positionslicht und/oder Rückfahrlicht in einer Heckleuchte. Die Beleuchtungseinrichtung 10 kann auch zur Realisierung sowohl von Scheinwerfer- als auch von Leuchtenfunktionen ausgebildet sein. In dem dargestellten Ausführungsbeispiel ist die Beleuchtungseinrichtung 10 als ein Kraftfahrzeugscheinwerfer ausgebildet.

Die Beleuchtungseinrichtung 10 umfasst ein Gehäuse 12, das in einer Lichtaustrittsrichtung 14 eine von einer lichtdurchlässigen Abdeckscheibe 16 verschlossene Lichtaustrittsöffnung aufweist. Im Innern des Gehäuses 12 sind beispielhaft zwei Halbleiterlichtquellen 18, insbesondere zwei Leuchtdioden (LEDs), angeordnet. Allerdings sind die Anzahl und die Anordnung der Halbleiterlichtquellen 18 in der Beleuchtungseinrichtung 10 beliebig, auch eine einzige Halbleiterlichtquelle 18 ist möglich. Den Halbleiterlichtquellen 18 könnten auch zusätzlich jeweils eine oder eine gemeinsame Vorsatzoptik zum Bündeln des ausgesandten Lichts zugeordnet sein (nicht dargestellt). Die Halbleiterlichtquellen 18 werden bevorzugt mittels eines pulsweitenmodulierten (PWM) Signals betrieben. Durch Variation eines Tastverhältnisses des PWM-Signals kann die Leistung der LEDs 18 und damit auch deren Abwärme und Helligkeit verändert werden. Das PWM-Signal wird von einem Steuergerät 20 zur Verfügung gestellt und den LEDs 18 über eine Signalleitung 22 zugeführt. Das Steuergerät 20 wird über ein Bordnetz des Kraftfahrzeugs, insbesondere von eine Fahrzeugbatterie, mit elektrischer Energie versorgt (nicht dargestellt). Das Steuergerät 20 ist für den Betrieb der LEDs 18 zuständig. Dabei kann das Steuergerät 20 das PWM-Signal geregelt oder gesteuert ermitteln. Das Steuergerät 20 ist in dem dargestellten Ausführungsbeispiel außerhalb des Scheinwerfergehäuses 12 angeordnet. Es ist auch denkbar, dass es an einer beliebigen Stelle innerhalb des Gehäuses 12 angeordnet ist.

Der Scheinwerfer 10 weist einen Reflektor 24 auf, der in dem dargestellten Ausführungsbeispiel als ein Halbschalenreflektor ausgebildet ist. Die Leuchtdioden 18 sind unter dem Halbschalenreflektor 24 angeordnet. Das von den LEDs 18 emittierte und an dem Reflektor 24 reflektierte Licht verlässt den Scheinwerfer 10 durch die Abdeckscheibe 16 und gelangt zur Erzeugung einer gewünschten Lichtverteilung auf eine Fahrbahn vor dem Fahrzeug. Im Falle eines Scheinwerfers könnte im Strahlengang des emittierten und/oder reflektierten Lichts eine Blendenanordnung (nicht dargestellt) zur Erzeugung bzw. zur Unterstützung der Erzeugung einer im Wesentlichen horizontalen Helldunkelgrenze auf der Fahrbahn vor dem Fahrzeug angeordnet sein. Der in Figur 1 gezeigte Scheinwerfer 10 arbeitet nach dem Reflexionsprinzip. Selbstverständlich könnte die Beleuchtungseinrichtung 10 auch als ein nach einem Projektionsprinzip arbeitender Scheinwerfer ausgebildet sein. Dazu wäre im Strahlengang des reflektierten Lichts eine Projektionslinse vorgesehen, die das reflektierte Licht zur Erzeugung einer gewünschten Lichtverteilung auf der Fahrbahn vor dem Fahrzeug abbildet. Falls die Lichtverteilung eine Helldunkelgrenze aufweisen soll, kann zwischen dem Reflektor und der Projektionslinse eine Blendenanordnung angeordnet sein, wobei die Linse eine Oberkante (bei vertikal stehender Blendenanordnung) oder eine Vorderkante (bei horizontal liegender Blendenanordnung) als Helldunkelgrenze auf die Fahrbahn projiziert.

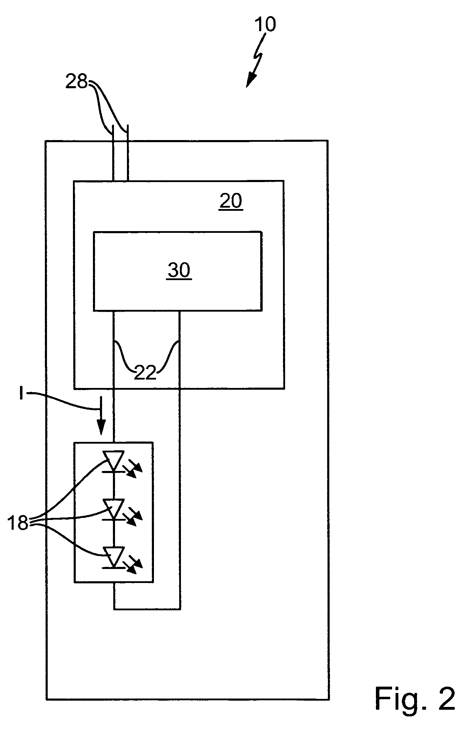

Figur 2 zeigt eine schematische Ansicht einer Beleuchtungseinrichtung 10 mit einem integrierten Steuergerät 20. Das Steuergerät 20 wird über Versorgungsleitungen 28 von dem Fahrzeugbordnetz mit elektrischer Energie versorgt. Das Steuergerät 20 vorfügt bspw. über ein Rechengerät 30, bspw. in Form eines Prozessors, auf dem ein Ansteuerprogramm zur Realisierung des Betriebs der Halbleiterlichtquellen 18 ablauffähig ist. Das Computerprogramm ist derart programmiert, dass es das erfindungsgemäße Verfahren ausführt, wenn es auf dem Prozessor 30 abläuft. Insbesondere ist das Computerprogramm zur Erzeugung eines pulsweitenmodulierten Signals und zur Ansteuerung der Halbleiterlichtquellen 18 mit dem PWM-Signal programmiert. Das PWM-Signal kann insbesondere hinsichtlich der Periodendauer (d.h. der Frequenz) und der Impulsdauer (und damit des Tastverhältnisses) variiert werden. Das PWM-Signal ist vorzugsweise ein Betriebsstrom I der Halbleiterlichtquellen 18.

Das Steuergerät 20 bzw. das auf dem Prozessor 30 ablaufende Computerprogramm können auch einen Betriebsmodus der Halbleiterlichtquellen 18 vorgeben. Dieser umfasst einen Normalbetrieb und einen von dem Normalbetrieb abweichenden Diagnosebetrieb. In dem Diagnosebetrieb wird eine Diagnose der Halbleiterlichtquellen, bspw. eine Überprüfung von Strom- und Spannungswerten auf Plausibilität zur Erkennung von Kurzschlüssen, Batterieschlüssen oder Leitungsbrüchen, ausgeführt. Dadurch können grundsätzliche Betriebsfunktionen der Halbleiterlichtquellen 18 sichergestellt werden. Während der gesamten Dauer der Diagnose werden die Halbleiterlichtquellen 18 kontinuierlich bestromt.

Damit eine vollständige Diagnose auch ohne ein Lichtflackern bzw. einen blitzähnlichen Effekt der Halbleiterlichtquellen 18 realisiert werden kann, wird gemäß der vorliegenden Erfindung vorgeschlagen, den Betriebsmoduls zur Diagnose der Halbleiterlichtquellen 18 in einen speziellen Diagnosebetrieb umzuschalten. Dieser unterscheidet sich vom Normalbetrieb zumindest dadurch, dass er eine größere Periodendauer aufweist. Das Tastverhältnis des PWM-Signals während des Diagnosebetriebs ist vorzugsweise in etwa gleich groß (maximal doppelt so groß) wie im Normalbetrieb, so dass Lichtblitze während des Diagnosebetriebs vermieden werden. Es ist aber auch denkbar, dass das Tastverhältnis im Diagnosebetrieb deutlich größer als (mindestens dreimal so groß wie) im Normalbetrieb, so dass bewusst Lichtblitze während des Diagnosebetriebs hervorgerufen werden. Die Impulsdauer während des Diagnosebetriebs ist vorzugsweise so lange gewählt, dass die gesamte Diagnose während der Impulsdauer ausgeführt werden kann. Durch eine Wahl der anschließenden Impulslücke kann das Tastverhältnis während des Diagnosebetriebs eingestellt werden.

Die Diagnose wird vorzugsweise zu Beginn eines jeden Einschaltens der Halbleiterlichtquellen 18 durchgeführt. Dabei kann unter dem Einschalten ein Betätigen eines Schaltelements (z.B. eines Lichtschalters, eines Bremspedalschalters oder eines Blinklichtschalters) durch den Fahrer verstanden werden. Ebenso kann darunter ein automatisches periodisches Einschalten der Halbleiterlichtquellen 18, bspw. durch ein Blinklichtrelais, verstanden werden. Insbesondere, aber nicht nur bei über einen längeren Zeitraum kontinuierlich leuchtenden Lichtfunktionen, wie z.B. Fernlicht, Abblendlicht, Tagfahrlicht, Positionslicht, Rücklicht, etc. ist es möglich, dass während des Normalbetriebs der Halbleiterlichtquellen 18 zur Diagnose von Zeit zu Zeit vorübergehend in den Diagnosebetrieb umgeschaltet wird. Der Zeitpunkt zum Umschalten in den Diagnosebetrieb kann zeit- oder ereignisgesteuert gewählt werden.

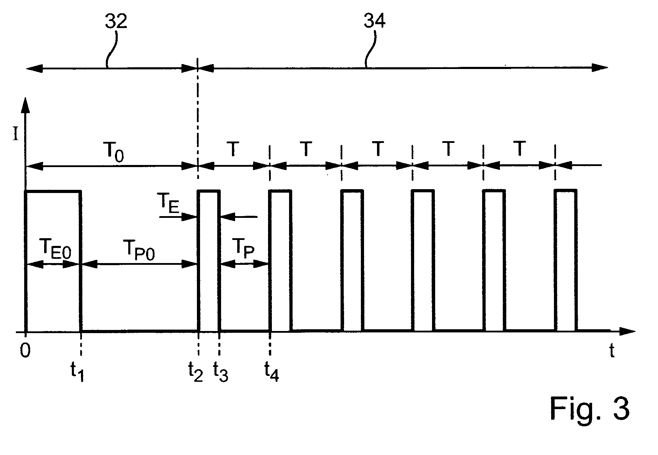

Eine bevorzugte Ausführungsform des Verfahrens soll anhand eines in Figur 3 dargestellten beispielhaften zeitlichen Verlaufs des pulsweitenmodulierten Signals I zum Betreiben der Halbleiterlichtquellen 18 näher erläutert werden. Ein Einschaltzeitpunkt der Halbleiterlichtquelle 18 ist in Figur 3 zum Zeitpunkt t = 0 definiert. Der Einschaltzeitpunkt bei t = 0 ist gleichzeitig der Beginn des Diagnosebetriebs 32 der Halbleiterlichtquelle 18. Der Diagnosebetrieb 32 umfasst nur eine einzige Periode der Dauer $T_0$ mit einem Impuls der Dauer $T_{E0}$ und einer Impulslücke der Dauer $T_{P0}$. Während des Impulses $T_{E0}$, also während einer Bestromung der Halbleiterlichtquellen 18, wird die Diagnose der Halbleiterlichtquellen 18 durchgeführt.

An den Diagnosebetrieb 32 schließt sich der Normalbetrieb 34 der Halbleiterlichtquelle 18 an, mit sich wiederholenden Perioden einer Dauer T, jeweils umfassend einen Impuls der Dauer $T_E$ und eine Impulslücke der Dauer $T_P$. Es ist anhand der Figur 3 deutlich zu erkennen, dass die Periodendauer $T_0$ während des Diagnosebetriebs 32 länger ist als die Periodendauer T während des Normalbetriebs 34. Wenn das Tastverhältnis im Diagnosebetrieb 32 in etwa gleich groß gewählt wird wie im Normalbetrieb 34 ($T_{E0}/T_0 = T_E/T$) ergibt sich dadurch eine längere Dauer $T_{E0}$ des Impulses während des Diagnosebetriebs gegenüber der Dauer $T_E$ während des Normalbetriebs, sodass ein längerer Zeitraum zur Durchführung der Diagnose zur Verfügung steht.

Zunächst soll das Verfahren mit Unterdrückung des blitzähnlichen Effekts während des Diagnosebetriebs 32 anhand von physikalischen Formeln näher erläutert werden. Es gilt im Weitern generell, dass Formelelemente mit einem tiefgestellten Index '0' immer eine Größe im Diagnosebetrieb 32 bezeichnen, die gleiche Größe ohne tiefgestellten Index '0' bezeichnet das gleiche Formelelement im Normalbetrieb 34.

Zuerst werden einige generellen physikalische Zusammenhänge definiert.

Das Tastverhältnis d oder $d_0$ berechnet sich aus:

$$(1) \qquad d = T_E/T \qquad \text{. für den Normalbetrieb 34,}$$

$$(2) \qquad d_0 = T_{E0}/T_0 \qquad \text{für den Diagnosebetrieb 32.}$$

Die Periodendauer $T$ oder $T_0$ berechnet sich aus:

$$(3) \qquad T = T_E + T_P \qquad \text{für den Normalbetrieb 34,}$$

$$(4) \qquad T_0 = T_{E0} + T_{P0} \qquad \text{für den Diagnosebetrieb 32.}$$

Die Frequenz $f$ oder $f_0$ berechnet sich aus:

$$(5) \qquad f = 1/T \qquad \text{für den Normalbetrieb 34,}$$

$$(6) \qquad f_0 = 1/T_0 \qquad \text{für den Diagnosebetrieb 32.}$$

Dadurch wird deutlich, dass die Halbleiterlichtquellen 18 im erfindungsgemäßen Verfahren in Abhängigkeit von dem aktuellen Betriebsmodus mit zwei unterschiedlichen Frequenzen $f_0$ und $f$ betrieben werden können, wobei die Frequenz $f_0$ im Diagnosebetrieb 32 kleiner ist, als die Frequenz $f$ im Normalbetrieb 34.

Da für die Durchführung einer vollständigen und detaillierten Diagnose eine bestimmte Dauer erforderlich ist (derzeit z.B. ca. 5ms), ist es nötig, die entsprechende Impulslücke $T_{P0}$ so zu berechnen, dass ein gewünschtes Tastverhältnis $d_0$ erreicht wird. Die Impulslücke $T_{P0}$ kann danach folgendermaßen berechnet werden:

$$(7) \qquad T_{P0} = T_0 - T_{E0} \qquad \text{(aus (4))}$$

durch Ausklammern von $T_{E0}$ ergibt sich:

$$(8) \qquad T_{P0} = T_{E0} * (T_0/T_{E0} - 1)$$

Zur Unterdrückung des blitzähnlichen Effekts während des Diagnosebetriebs 32 ist es im Idealfall und deshalb bevorzugt das Ziel, das Tastverhältnis $d_0$ des pulsweitenmodulierten Signals I während des Diagnosebetriebs 32 gleich groß wie das Tastverhältnis $d$ während des Normalbetriebs 34 zu wählen. Damit wird durch die aufgrund der erforderlichen Diagnosedauer im Wesentlichen vorgegebene Impulsdauer $T_{E0}$ (z.B. ca. 5ms) die Frequenz $f_0$ herabgesetzt bzw. die Periodendauer $T_0$ verlängert. Das Tastverhältnis $d_0$ des pulsweitenmodulierten Signals I während des Diagnosebetriebs 32 kann von diesem Idealfall abweichen, sollte aber zumindest im Bereich des Tastverhältnisses $d$ im Normalbetrieb 34 der Halbleiterlichtquelle 18 gewählt werden, um die Unterdrückung des blitzähnlichen Effekts zu gewährleisten.

Für den Idealfall gilt also:

$$(9) \qquad d = d_0 \quad \text{also} \quad T_E/T = T_{E0}/T_0 \qquad \text{(aus (1) und (2))}$$

Bei festgelegtem Tastverhältnis $d_0$ und Impulsdauer $T_{E0}$ kann somit die Impulslücke $T_{P0}$ im Diagnosebetrieb 32 folgendermaßen berechnet werden:

$$(10) \qquad T_{P0} = T_{E0} * (T/T_E - 1) \qquad \text{(aus (8) und (9))}$$

Bei der Berechnung von $T_{P0}$ ist zu berücksichtigen, dass die Frequenz $f_0$ nicht so weit herabgesetzt werden sollte, dass die Frequenz $f_0$ eine Grenzfrequenz einer dynamischen, visuellen Empfindlichkeit des menschlichen Auges unterschreitet. Anderenfalls würde das menschliche Auge die (relativ langsamen) Schwankungen zwischen Impuls und Impulslücke als störendes Lichtflackern wahrnehmen. Die Grenzfrequenz liegt bei ca. 50 Hz.

Es gilt also:

$$(11) \qquad f >= f_{0min} >= \text{etwa } 50 \text{ Hz}$$

Ergibt sich für den Idealfall des konstanten Tastverhältnisses $d_0 = d$ eine Frequenz $f_0$ für den Diagnosebetrieb 32, welche kleiner als $f_{0min}$ ist, dann muss die Frequenz $f_0$ für den Diagnosebetrieb 32 begrenzt werden, indem eine entsprechend kürzere Impulslücke $T_{P0}$ gewählt wird. Das Tastverhältnis $d_0$ weicht dann vom Tastverhältnis d ab. Um die Unterdrückung des blitzähnlichen Effekts weiterhin realisieren zu können, sollte die Frequenz $f_0$ genau auf $f_{0min}$ gesetzt werden, damit die Abweichung der beiden Tastverhältnisse $d_0$ und d so gering wie möglich ist.

Aus dem Formeln (4) und (6) ergibt sich dann:

$$(12) \qquad f_0 = f_{0min} = 1/(T_{E0} + T_{P0}) \qquad \text{(aus (4) und (6))}$$

Wird die Formel (12) auf die Impulslücke $T_{P0}$ umgestellt, ergibt sich dann:

$$(13) \qquad T_{P0} = 1/f_{0min} - T_{E0}$$

Zwar ergibt sich dadurch ein Sprung für das Tastverhältnis $d_0$. Dieser führt jedoch lediglich zu einem für das menschliche Auge nicht oder kaum wahrnehmbaren Lichtblitz. Insbesondere fällt der Sprung des Tastverhältnisses $d_0$ in der Regel deutlich kleiner aus als bei einem direktem Übergang auf die für den Normalbetrieb 34 geltende Impulslückendauer $T_P$.

Ergibt sich bei der Berechnung der Dauer der Impulslücke $T_{P0}$ mit dem Tastverhältnis d aus dem Normalbetrieb 34 eine höhere Frequenz $f_0$ als die Mindestfrequenz $f_{0min}$ (d.h. $T_{P0}$ bei der Frequenz $f_0$ ist kleiner als eine berechenbare Impulslücke $T_{P0}$ bei $f_{0min}$), so kann der Diagnosebetrieb 32 mit dem gleichen Tastverhältnis des Normalbetriebs 34 ($d_0$ = d) durchführt werden (Idealfall). Ist dies nicht der Fall, so wird die Impulslücke $T_{P0}$ mit der Frequenz $f_{0min}$ berechnet.

Im erfindungsgemäßen Verfahren wird also zwischen Formel (13) und Formel (10) entschieden. Der jeweils berechnete kleinere Wert wird im erfindungsgemäßen Verfahren für die Impulslücke $T_{P0}$ angewandt.

$$(14) \qquad T_{P0} = \min ( 1/f_{0min} - T_{E0}; T_{E0} * (T/T_E - 1) )$$

Konkrete Zahlenbeispiele verdeutlichen die Möglichkeiten, dass ein blitzähnlicher Effekt unterdrückt werden kann.

Zunächst wird ein Zahlenbeispiel des Idealfalls durchgerechnet:

Gegeben sind bspw.: $T_{E0}$ = 4ms, f = 200 Hz, d = 25%, $f_{0min}$ = 50 Hz Damit ergibt sich rechnerisch:

$$T = 1/f = 1/200 = 5\text{ms} \qquad \text{aus (5)}$$

$$T_E = d*T = 0,25 * 5\text{ms} = 1,25\text{ms} \qquad \text{aus (1)}$$

$$T_P = T-T_E = 5\text{ms} - 1,25\text{ms} = 3,75\text{ms} \qquad \text{aus (3)}$$

Die gesuchte Impulslücke $T_{P0}$ ergibt sich dann aus:

$$T_{P0} = \min (1/50 - 0,004;$$
$$0,004 * (0,005/0,00125 - 1)) \text{ aus (14)}$$

$$T_{P0} = min (16ms; 12ms) = 12ms.$$

Da die berechnete Impulslücke $T_{P0}$ aus dem Tastverhältnis d des Normalbetriebs 34 kleiner ist als die maximal zulässige Impulslücke mit der Minimalfrequenz $f_{0min}$, kann der Idealfall $d_0 = d$ angewandt werden.

Es folgt ein Zahlenbeispiel, bei dem ein geändertes Tastverhältnis d des Normalbetriebs 34 eine Begrenzung der Impulslücke $T_{P0}$ nötig macht.

Gegeben sind bspw. : $T_{E0}$ = 4ms, f = 200 Hz, d = 10%, $f_{0min}$ = 50Hz Damit ergibt sich rechnerisch:

$$T = 1/f \quad = 1/200 \qquad = 5ms \qquad\qquad aus (5)$$

$$T_E = d*T \quad = 0,1 * 5ms \qquad = 0,5ms \qquad aus (1)$$

$$T_P = T-T_E \quad = 5ms - 0,5ms \quad = 4,5ms \qquad aus (3)$$

Die gesuchte Impulslücke $T_{P0}$ ergibt sich dann aus:

$$T_{P0} = min (1/50 - 0,004;$$
$$0,004 * (0,005/0,0005 - 1)) \qquad aus (14)$$
$$T_{P0} = min (16ms; 36ms) = 16ms.$$

Die berechnete Impulslücke $T_{P0}$ aus dem Tastverhältnis d des Normalbetriebs 34 ist jetzt größer als die maximal zulässige Impulslücke mit der Minimalfrequenz $f_{0min}$. Deshalb kann der Idealfall $d_0 = d$ nicht angewandt werden, da die Frequenz $f_0$ kleiner als 50 Hz ausfallen würde. Die Frequenz $f_0$ wird begrenzt, bspw. auf $f_{0min}$, was einer Impulslücke $T_{P0}$ von 16ms entspricht.

Das Tastverhältnis $d_0$ des Diagnosebetriebs 32 weicht deshalb von Tastverhältnis d des Normalbetriebs 34 ab und kann wie folgt errechnet werden:

$$(15) \qquad d_0 = T_{E0} / (T_{E0}+T_{P0}) \qquad (aus (2) und (4))$$
$$d_0 = 4 / (4+16) * 100\% = 20\%$$

Das Tastverhältnis d während des Normalbetriebs ist gegeben (d = 10%).

Somit ergibt sich im Diagnosebetrieb 32 im begrenzten Fall ein noch tolerierbarer Anstieg des Tastverhältnisses von d = 10% auf $d_0$ = 20%. Eine solche Erhöhung des Tastverhältnisses im Diagnosebetrieb 32 führt allenfalls zu einer kaum wahrnehmbaren Helligkeitssteigerung des ausgesandten Lichts. Insbesondere ist der Anstieg tolerierbar, da das Tastverhältnis $d_0$ im Diagnosebetrieb 32 absolut gesehen relativ gering ist.

Im Folgenden soll das Verfahren mit einem wunschgemäßen Hervorheben des blitzähnlichen Effekts während des Diagnosebetriebs 32 anhand von physikalischen Formeln näher erläutert werden. Dazu muss das Tastverhältnis $d_0$ des Diagnosebetriebs 32 deutlich größer sein als das Tastverhältnis d im Normalbetrieb 34. Das erhöhte Tastverhältnis $d_0$ kann entweder durch eine Verlängerung der Impulsdauer $T_{E0}$ oder durch eine Verkürzung der Impulslücke $T_{P0}$ oder durch eine Kombination beider Maßnahmen erreicht werden.

Soll die Impulslücke $T_{P0}$ verkürzt werden, ergibt sich bei einer gegebenem Impulsdauer $T_{E0}$ und $d_0 >> d$ für die verkürzte Impulslücke $T_{P0}$ aus den Formeln (9) und (10)

$$(16) \qquad T_{P0} = T_{E0} * (1 - d_0)/d_0 \qquad (aus (15))$$

Soll die Impulsdauer $T_{E0}$ verlängert werden, ergibt sich bei der gegebenem Impulslücke $T_{P0}$ und $d_0 >> d$ aus Formel (16) durch Umstellung

$$(17) \qquad T_{E0} = T_{P0} * d_0/(1 - d_0) \qquad (aus\ (16))$$

Aus Formel (1) und (6) ergibt sich bei $f_0 = f_{0min}$ bei Berücksichtigung der Grenzfrequenz (ca. 50Hz) der dynamischen, visuellen Empfindlichkeit des menschlichen Auges

$$(18) \qquad T_{E0} = d_0 * 1/f_{0min} = d_0 / f_{0min} \qquad (aus\ (1)\ und\ (6))$$

Im erfindungsgemäßen Verfahren wird auch hier zwischen zwei Formeln (17) und (18) entschieden. Der jeweils berechnete kleinere Wert wird im Verfahren angewandt.

$$(19) \qquad T_{E0} = min\ (d_0 * 1/f_{0min};\ T_{P0} * d_0/(1 - d_0))$$

Bei einer Kombination aus Verkürzung der Impulslücke $T_{P0}$ und Verlängerung der Impulsdauer $T_{E0}$ kann jedes gewünschte Tastverhältnis $d_0$ eingestellt werden.

Mit gegebenem $f_0 >= f_{0min}$ und $d_0 >> d$ ergeben sich dann:

$$(20) \qquad\qquad\qquad\qquad\qquad\qquad\qquad\qquad\qquad\qquad T$$

$$(21) \qquad\qquad\qquad\qquad\qquad\qquad\qquad\qquad\qquad\qquad T$$

Konkrete Zahlenbeispiele verdeutlichen die Möglichkeiten, um den blitzähnlichen Effekt hervorheben zu können.

Ein erstes Beispiel zeigt Verfahrensschritte mit Verkürzung der Impulslücke $T_{P0}$.

Gegeben sind bspw.: $T_{E0}$ = 4ms, f = 200 Hz, d = 50%, $d_0$ = 90% Das Tastverhältnis d0 ist bewusst sehr hoch gewählt worden, um den blitzartigen Effekt besonders hervorheben zu können. Damit ergibt sich rechnerisch:

$$T = 1/f \quad = 1/200 \qquad = 5ms \qquad aus\ (5)$$

$$T_E = d*T \quad = 0,5 * 5ms \qquad = 2,5ms \qquad aus\ (1)$$

$$T_P = T-T_E = 5ms - 2,5ms \quad = 2,5ms \qquad aus\ (3)$$

Die Impulslücke $T_{P0}$ errechnet sich demnach

$$T_{P0} = 0,004* (1 - 0,9)/0,9 = 0,44ms \qquad aus\ (16)$$

Ohne die Erhöhung des Tastverhältnisses $d_0$, d.h. mit $T_{P0} = T_P$, würde sich für den Diagnosebetrieb 32 ein zu kleines Tastverhältnis $d_0$ ergeben, so dass kein merklicher blitzartiger Effekt wahrnehmbar wäre.

$$d_0 = 4/(4+2,5) = 61,5\% \qquad aus\ (15)$$

Der Wert von $d_0$=61,5% liegt zu nah bei d=50% und würde deshalb nicht zu einem Lichtblitz führen.

Ein zweites Beispiel zeigt Verfahrensschritte mit Verlängerung der Impulsdauer $T_{E0}$ ohne Begrenzung der Impulslücke $T_{P0}$.

Gegeben sind bspw. : $T_{P0} = T_P$, f = 200 Hz, d = 10%, $d_0$ = 75%, $f_{0min}$ = 50Hz

Damit ergibt sich rechnerisch:

$$T = 1/f = 1/200 = 5ms \qquad aus\ (5)$$

$$T_E = d*T = 0,1 * 5ms = 0,5ms \qquad aus\ (1)$$

$$T_P = T-T_E = 5ms - 0,5ms = 4,5ms \qquad aus\ (3)$$

Die Impulsdauer $T_{E0}$ errechnet sich demnach

$$T_{E0} = min\ (0,75 * 1/50;$$
$$0,0045 * 0,75 / (1 - 0,75)) \qquad aus\ (19)$$

$$T_{E0} = min\ (15ms;\ 13,5ms) = 13,5ms.$$

Ohne diese Maßnahme, d.h. beispielsweise mit $T_{E0}$ = 4ms, würde sich für den Diagnosebetrieb 32 ein zu kleines Tastverhältnis $d_0$ ergeben, wobei kein merklicher blitzartiger Effekt wahrnehmbar wäre.

$$d_0 = 4/(4+4,5) = 47\% \qquad aus\ (15)$$

Der Wert von $d_0$=47% liegt so nah bei d=10% und ist insbesondere absolut gesehen so klein, dass dies nicht zu einem Lichtblitz während des Diagnosebetriebs 32 führen würde.

Ein wesentlicher Aspekt der vorliegenden Erfindung ist nicht darin zu sehen, dass das Tastverhältnis $d_0$ im Diagnosebetrieb 32 in einem bestimmten Verhältnis zu dem Tastverhältnis d im Normalbetrieb 34 liegt, sondern vielmehr darin, dass es durch die Erfindung erstmals möglich ist, das Tastverhältnis $d_0$ bzw. die Impulsdauer $T_{E0}$ während des Diagnosebetriebs 32 einer mit einem PWM-Signal I betriebenen Halbleiterlichtquelle 18 nahezu beliebig einzustellen. Dadurch ist eine besonders einfache und flexible Diagnose der Halbleiterlichtquelle 18 möglich.

Ein drittes Beispiel zeigt Verfahrensschritte mit Verlängerung der Impulsdauer $T_{E0}$ mit Begrenzung, um die Frequenz $f_{0min}$ nicht zu unterschreiten.

Gegeben sind bspw.: $T_{P0}$ = $T_P$, f = 200 Hz, d = 50%, $d_0$ = 90%, $f_{0min}$ = 50Hz

Damit ergibt sich rechnerisch:

$$T = 1/f = 1/200 = 5ms \qquad aus\ (5)$$

$$T_E = d*T = 0,5 * 5ms = 2,5ms \qquad aus\ (1)$$

$$T_P = T-T_E = 5ms - 2,5ms = 2,5ms \qquad aus\ (3)$$

Die Impulsdauer $T_{E0}$ errechnet sich demnach

$$T_{E0} = min\ (0,9 * 1/50;$$
$$0,0025 * 0,9 / (1 - 0,9)) \qquad aus\ (19)$$

$$T_{E0} = min\ (18ms;\ 22,5ms) = 18ms.$$

Das Tastverhältnis $d_0$ errechtet sich dabei:

$$d_0 = 18/(18+2,5) = 87,8\% \qquad\qquad aus\ (15)$$

Damit ist das Tastverhältnis $d_0$ derart hoch, dass ein merklicher blitzartiger Effekt wahrnehmbar ist. Bei einer Impulsdauer von $T_{E0}$ = 4ms, würde sich für den Diagnosebetrieb 32 ein zu kleines Tastverhältnis $d_0$ ergeben, wobei ein blitzartiger Effekt kaum wahrnehmbar wäre.

$$d_0 = 4/(4+2,5) = 61,5\% \qquad\qquad aus\ (15)$$

Ein viertes Beispiel zeigt Verfahrensschritte mit Verlängerung der

Impulsdauer $T_{E0}$ kombiniert mit einer Verkürzung der Impulslücke $T_{P0}$.

Gegeben sind bspw.: f = 200 Hz, d = 50%, $d_0$ = 90%, $f_0$ = 200 Hz Daraus folgt: T = $T_0$

Damit ergibt sich rechnerisch:

$$T = 1/f \quad = 1/200 \qquad = 5ms \qquad aus\ (5)$$

$$T_E = d*T \quad = 0,5\ *\ 5ms \qquad = 2,5ms \qquad aus\ (1)$$

$$T_P = T-T_E \quad = 5ms\ -\ 2,5ms \qquad = 2,5ms \qquad aus\ (3)$$

Die Impulsdauer $T_{E0}$ errechnet sich demnach

$$(22)\ T_{E0} = T_0\ *\ d_0 \qquad\qquad aus\ (2)$$

$$T_{E0} = 5ms\ *\ 0,9 = 4,5ms$$

$$T_{P0} = 5ms\ -\ 4,5ms\ =\ 0,5ms \qquad\qquad aus\ (4)$$

Das Tastverhältnis $d_0$ errechtet sich dabei:

$$d_0 = 18/(18+2,5) = 87,8\% \qquad\qquad aus\ (15)$$

Bei einem Tastverhältnis $d_0$ = d = 50% würde kein blitzartiger Effekt wahrnehmbar sein.

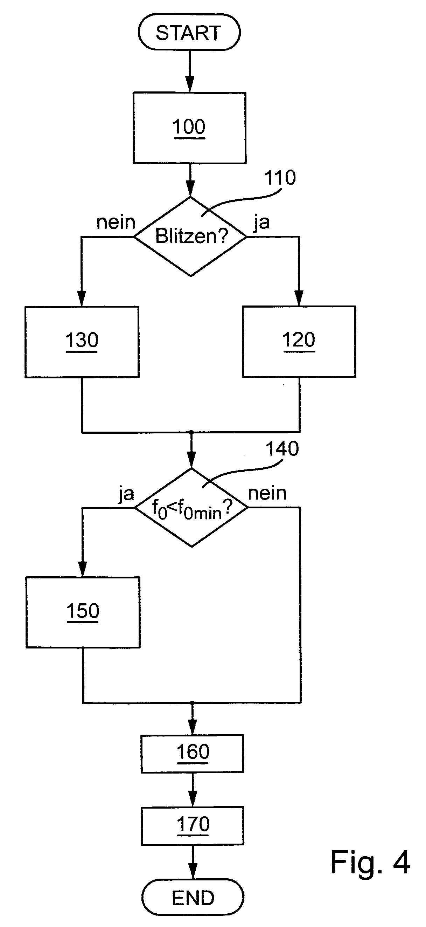

Figur 4 zeigt ein Ablaufdiagramm des erfindungsgemäßen Verfahrens gemäß einer bevorzugten Ausführungsform. Die einzelnen Verfahrensschritte können in einem Computerprogramm programmiert sein, wobei das Computerprogramm auf einem Rechengerät 30 im Steuergerät 20 ablauffähig sein kann.

In einem Schritt 100 betätigt der Fahrer des Kraftfahrzeugs ein Schaltelement zum Aktivieren einer gewünschten Lichtfunktion. Mit der Wahl der Lichtfunktion ist eine notwendige Lichtstärke der Beleuchtungseinrichtung 10 und damit auch ein mittlerer Betriebsstrom I der Halbleiterlichtquellen 18 für den Normalbetrieb 34 festgelegt. Damit ist auch das Tastverhältnis d des PWM-Signals I zum Betrieb der Halbleiterlichtquellen 18 der Beleuchtungseinrichtung 10 vorgegeben. Bei dem Verfahren aus Figur 4 wird unmittelbar nach dem Einschalten der Halbleiterlichtquellen 18 die Diagnose der Halbleiterlichtquelle 18 im Diagnosebetrieb 32 durchgeführt. Es ist jedoch auch möglich, dass im Rahmen des Verfahrens, insbesondere bei kontinuierlich leuchtenden Lichtfunktionen, der Normalbetrieb 34 zu einem beliebigen Zeitpunkt durch den Diagnosebetrieb 32 unterbrochen wird.

Dann wird in einem Abfrageblock 110 abgefragt, ob der blitzähnliche Effekt unterdrückt oder hervorgehoben werden soll. Bei einer Unterdrückung wird vorgesehen, dass der Diagnosebetrieb 32 (Schritt 130) bei dem gleichen oder einem ähnlichen Tastverhältnis wie im Normalbetrieb 34 betrieben wird ($d_0$ = d). Die Frequenz $f_0$ im Diagnosebetrieb 32 weicht dabei in der Regel von der Frequenz f im Normalbetrieb 34 ab, insbesondere wird die Frequenz $f_0$ niedriger gewählt.

Soll der blitzähnliche Effekt hervorgehoben werden, so wird das Tastverhältnis $d_0$ im Diagnosebetrieb 32 (Schritt 120) deutlich größer gewählt als das Tastverhältnis d im Normalbetrieb 34. Dies kann entweder durch eine Verlängerung der Impulsdauer $T_{E0}$ oder durch eine Verkürzung der Impulslücke $T_{P0}$ im Diagnosebetrieb oder durch eine Kombination beider Maßnahmen erreicht werden.

Unabhängig davon, ob der blitzähnliche Effekt unterdrückt oder hervorgehoben werden soll, wird anschließend in einem Abfrageblock 140 ermittelt, ob die für den Diagnosebetrieb 32 berechnete Frequenz $f_0$ kleiner als die Minimalfrequenz $f_{0min}$ (z.B. etwa 50 Hz) ist. Falls dies der Fall ist, wird in einem Schritt 150 die Impulslücke $T_{P0}$ bevorzugt so weit verringert, dass danach die Minimalfrequenz $f_{0min}$ und damit auch eine maximale Periodendauer $T_0$ für den Diagnosebetrieb 32 eingestellt ist. Anschließend wird in einem Schritt 160 die Diagnose der Halbleiterlichtquellen 18 während der ermittelten Impulsdauer $T_{E0}$ ausgeführt. Schließlich wird in einem Schritt 170 der Betriebsmodus der Halbleiterlichtquellen 18 in den Normalbetrieb 34 umgeschaltet.

## Patentansprüche

1. Verfahren zum Betreiben einer Beleuchtungseinrichtung (10) eines Fahrzeugs, insbesondere eines Kraftfahrzeugs, die Beleuchtungseinrichtung (10) umfassend mindestens eine Halbleiterlichtquelle (18), insbesondere eine Leuchtdiode, die mittels eines pulsweitenmodulierten Signals mit einem vorgebbaren Tastverhältnis (d) zwischen Impulsdauer ($T_E$) und Periodendauer (T) betrieben wird, wobei die Halbleiterlichtquelle (18) zu vorgebbaren Zeitpunkten eine Diagnose durchläuft und die Halbleiterlichtquelle (18) während der gesamten Dauer der Diagnose mit einem Impuls ($T_{E0}$) des pulsweitenmodulierten Signals beaufschlagt wird, wobei die Halbleiterlichtquelle (18) während der Diagnose in einem von einem Normalbetrieb (34) der Halbleiterlichtquelle (18) abweichenden Diagnosebetrieb (32) betrieben wird, **dadurch gekennzeichnet, dass** die Diagnose der Halbleiterlichtquelle (18) unmittelbar nach einem Einschalten der Beleuchtungseinrichtung (10) ausgeführt wird und dass während des Diagnosebetriebs (32) die Periodendauer ($T_0$) des pulsweitenmodulierten Signals größer gewählt wird als die Periodendauer (T) während des Normalbetriebs (34), wobei das Tastverhältnis ($d_0$) des pulsweitenmodulierten Signals während des Diagnosebetriebs (32) gleich groß wie das Tastverhältnis (d) während des Normalbetriebs (34) der Halbleiterlichtquelle (18) gewählt wird.

2. Verfahren nach Anspruch 1, **dadurch gekennzeichnet, dass** die Diagnose der Halbleiterlichtquelle (18) während lediglich einer verlängerten Periode ($T_0$) des pulsweitenmodulierten Signals ausgeführt wird.

3. Verfahren nach Anspruch 1 oder 2, **dadurch gekennzeichnet, dass** die Periodendauer ($T_0$) des pulsweitenmodulierten Signals während des Diagnosebetriebs (32) höchstens 20 ms beträgt.

4. Verfahren nach einem der Ansprüche 1 bis 3 , **dadurch gekennzeichnet, dass** während des Normalbetriebs (34) der Halbleiterlichtquelle (18) zu vorgegebenen Zeitpunkten zur Diagnose der Halbleiterlichtquelle (18) vorübergehend in den Diagnosebetrieb (32) umgeschaltet wird.

5. Verfahren nach einem der Ansprüche 1 bis 4, **dadurch gekennzeichnet, dass** das pulsweitenmodulierte Signal einen Betriebsstrom (I) der Halbleiterlichtquelle (18) umfasst.

6. Steuergerät (20) einer Beleuchtungseinrichtung (10) eines Fahrzeugs, insbesondere eines Kraftfahrzeugs, zum Betrieb einer Halbleiterlichtquelle (18), insbesondere einer Leuchtdiode, der Beleuchtungseinrichtung (10) mittels eines pulsweitenmodulierten Signals mit einem vorgebbaren Tastverhältnis (d) zwischen Impulsdauer ($T_E$) und Periodendauer (T) und zur vorübergehenden Diagnose der Halbleiterlichtquelle (18) ausgebildet ist und wobei die Halbleiterlichtquelle (18) während der gesamten Dauer der Diagnose mit einem Impuls ($T_{E0}$) des pulsweitenmodulierten Signals beaufschlagt ist, wobei das Steuergerät (20) zum Betrieb der Halbleiterlichtquelle (18) während der Diagnose in einem von einem Normalbetrieb (34) der Halbleiterlichtquelle (18) abweichenden Diagnosebetrieb (32) ausgebildet ist, **dadurch gekennzeichnet, dass** das Steuergerät (20) während des Diagnosebetriebs (32) eine Periodendauer ($T_0$) des pulsweitenmodulierten Signals größer wählt als die Periodendauer (T) während des Normalbetriebs (34), wobei das Tastverhältnis ($d_0$) des pulsweitenmodulierten Signals während des Diagnosebetriebs (32) gleich groß wie das Tastverhältnis (d) während des Normalbetriebs (34) der Halbleiterlichtquelle (18) ist.

7. Steuergerät nach Anspruch 6, **dadurch gekennzeichnet, dass** das Steuergerät (20) zur Ausführung eines Verfahrens nach einem der Ansprüche 2 bis 5 ausgebildet ist.

8. Beleuchtungseinrichtung (10) eines Fahrzeugs, insbesondere eines Kraftfahrzeugs, die Beleuchtungseinrichtung (10) umfassend mindestens eine Halbleiterlichtquelle (18), insbesondere eine Leuchtdiode, und ein Steuergerät (20), das zum Betrieb der Halbleiterlichtquelle (18) mittels eines pulsweitenmodulierten Signals mit einem vorgebbaren Tastverhältnis (d) zwischen Impulsdauer ($T_E$) und Periodendauer (T) und zur vorübergehenden Diagnose der Halbleiterlichtquelle (18) ausgebildet ist, und wobei die Halbleiterlichtquelle (18) während der gesamten Dauer der Diagnose mit einem Impuls ($T_{E0}$) des pulsweitenmodulierten Signals beaufschlagt ist, **dadurch gekennzeichnet, dass** das Steuergerät (20) nach einem der Ansprüche 6 oder 7 ausgebildet ist.

9. Beleuchtungseinrichtung (10) nach Anspruch 8, **dadurch gekennzeichnet, dass** das Steuergerät (20) zur Ausführung eines Verfahrens nach einem der Ansprüche 2 bis 5 ausgebildet ist.

**Claims**

1. Method for the operation of an illumination device (10) for a vehicle, in particular a motor vehicle, said illumination device (10) comprising at least one semiconductor light source (18), in particular a light-emitting diode, which is operated by means of a pulse-width modulated signal with a presettable pulse duty factor (d) between pulse duration ($T_E$) and period (T), wherein the semiconductor light source (18) runs through a diagnosis at presettable points in time and, during the entire duration of the diagnosis, the semiconductor light source (18) has a pulse ($T_{E0}$) of the pulse-width modulated signal applied to it, wherein, during the diagnosis, the semiconductor light source (18) is operated in a diagnostic operation (32) which deviates from the normal operation (34) of the semiconductor light source (18), **characterised in that** the diagnosis of the semiconductor light source (18) is performed immediately after switching on the illumination device (10) and that, during the diagnostic operation (32), the period ($T_0$) of the pulse-width modulated signal is selected to be greater than the period (T) during normal operation (34), wherein the pulse duty factor ($d_0$) of the pulse-width modulated signal during the diagnostic operation (32) is selected to be as large as the pulse duty factor (d) during normal operation (34) of the semiconductor light source (18).

2. Method according to claim 1, **characterised in that** the diagnosis of the semiconductor light source (18) is carried out simply during a longer period ($T_0$) of the pulse-width modulated signal.

3. Method according to claim 1 or 2, **characterised in that** the period ($T_0$) of the pulse-width modulated signal during the diagnostic operation (32) is no more than 20 ms.

4. Method according to one of the claims 1 to 3, **characterised in that**, during normal operation (34) of the semiconductor light source (18), a switch-over occurs to diagnostic operation (32) at specified points in time momentarily for the diagnosis of the semiconductor light source (18).

5. Method according to one of the claims 1 to 4, **characterised in that** the pulse-width modulated signal comprises an operating current (I) of the semiconductor light source (18).

6. Control device (20) of an illumination device (10) of a vehicle, in particular a motor vehicle, is designed for the operation of a semiconductor light source (18), in particular a light-emitting diode, of the illumination device (10) by means of a pulse-width modulated signal with a presettable pulse duty factor (d) between pulse duration ($T_E$) and period (T) and for the momentary diagnosis of the semiconductor light source (18) and wherein, during the entire duration of the diagnosis, the semiconductor light source (18) has a pulse ($T_{E0}$) of the pulse-width modulated signal applied to it, wherein the control device (20) is designed to operate the semiconductor light source (18) during the diagnosis in a diagnostic operation (32) which deviates from normal operation (34) of the semiconductor light source (18), **characterised in that,** during the diagnostic operation (32), the control device (20) selects a period ($T_0$) of the pulse-width modulated signal to be greater than the period (T) during normal operation (34), wherein the pulse duty factor ($d_0$) of the pulse-width modulated signal during the diagnostic operation (32) is selected to be as large as the pulse duty factor (d) during normal operation (34) of the semiconductor light source (18).

7. Control device according to claim 6, **characterised in that** the control device (20) is designed to perform a method according to one of the claims 2 to 5.

8. Illumination device (10) for a vehicle, in particular a motor vehicle, said illumination device (10) comprising at least one semiconductor light source (18), in particular a light-emitting diode, and a control unit (20) which is designed for the operation of the semiconductor light source (18) by means of a pulse-width modulated signal with a presettable pulse duty factor (d) between pulse duration ($T_E$) and period (T) and for the momentary diagnosis of the semiconductor light source (18), and wherein, during the entire duration of the diagnosis, the semiconductor light source (18) has a pulse ($T_{E0}$) of the pulse-width modulated signal applied to it, **characterised in that** the control unit (20) is designed according to one of the claims 6 or 7.

9. Illumination device (10) according to claim 8, **characterised in that** the control unit (20) is designed perform a method according to one of the claims 2 to 5.

**Revendications**

1. Procédé de fonctionnement d'un dispositif d'éclairage (10) d'un véhicule, en particulier d'un véhicule automobile, le dispositif d'éclairage (10) comprenant au moins une source de lumière à semi-conducteur (18), en particulier une diode électroluminescente qui est commandée à l'aide d'un signal à modulation d'impulsions en largeur avec un taux d'impulsions (d) prescriptible entre la durée d'impulsion ($T_E$) et la durée de période (T), la source de lumière à semi-conducteur (18) réalisant à des moments prescriptibles un diagnostic et la source de lumière à semi-conducteur (18) étant alimentée pendant la durée totale du diagnostic en une impulsion ($T_{E0}$) du signal à modulation d'impulsions en largeur, la source de lumière à semi-conducteur (18) étant exploitée pendant le diagnostic dans un mode de diagnostic (32) distinct d'un mode normal (34) de la source de lumière à semi-conducteur (18), **caractérisé en ce que** le diagnostic de la source de lumière à semi-conducteur (18) est réalisé directement après une mise en service du dispositif d'éclairage (10) et **en ce que** pendant le mode de diagnostic (32), la durée de période ($T_0$) du signal à modulation d'impulsions en largeur est choisie plus grande que la durée de période (T) pendant le mode normal (34), le taux d'impulsions ($d_0$) du signal à modulation d'impulsions en largeur pendant le mode diagnostic (32) est choisi de même ampleur que le taux d'impulsions (d) pendant le mode normal (34) de la source de lumière à semi-conducteur (18).

2. Procédé selon la revendication 1, **caractérisé en ce que** le diagnostic de la source de lumière à semi-conducteur (18) est réalisé uniquement pendant une période prolongée ($T_0$) du signal à modulation d'impulsions en largeur.

3. Procédé selon la revendication 1 ou 2, **caractérisé en ce que** la durée de période ($T_0$) du signal à modulation d'impulsions en largeur pendant le mode de diagnostic (32) s'élève au maximum à 20 ms.

4. Procédé selon l'une quelconque des revendications 1 à 3, **caractérisé en ce que** pendant le mode normal (34), la source de lumière à semi-conducteur (18) est commutée temporairement en mode de diagnostic (32) à des moments prescrits pour le diagnostic de la source de lumière à semi-conducteur (18).

5. Procédé selon l'une quelconque des revendications 1 à 4, **caractérisé en ce que** le signal à modulation d'impulsions en largeur comporte un courant de fonctionnement (I) de la source de lumière à semi-conducteur (18).

6. Appareil de commande (20) d'un dispositif d'éclairage (10) d'un véhicule, en particulier d'un véhicule automobile pour le fonctionnement d'une source de lumière à semi-conducteur (18), en particulier d'une diode électroluminescente, du dispositif d'éclairage (10) à l'aide d'un signal à modulation d'impulsions en largeur avec un taux d'impulsions prescriptible (d) entre la durée d'impulsion ($T_E$) et la durée de période (T) et pour le diagnostic temporaire de la source de lumière à semi-conducteur (18) et la source de lumière à semi-conducteur (18) pendant la durée entière du diagnostic étant alimentée en une impulsion ($T_{E0}$) du signal à modulation d'impulsions en largeur, l'appareil de commande (20) étant réalisé pour le fonctionnement de la source de lumière à semi-conducteur (18) pendant le diagnostic dans un mode de diagnostic (32) différent d'un mode normal (34) de la source de lumière à semi-conducteur (18), **caractérisé en ce que** l'appareil de commande (20) pendant le mode de diagnostic (32) choisit une durée de période ($T_0$) du signal à modulation d'impulsions en largeur plus grande que la durée de période (T) pendant le mode normal (34), le taux d'impulsions ($d_0$) du signal à modulation d'impulsions en largeur pendant le mode de diagnostic (32) est de même ampleur que le taux d'impulsions (d) pendant le mode normal (34) de la source de lumière à semi-conducteur (18).

7. Appareil de commande selon la revendication 6, **caractérisé en ce que** l'appareil de commande (20) est réalisé pour la mise en oeuvre d'un procédé selon l'une quelconque des revendications 2 à 5.

8. Dispositif d'éclairage (10) d'un véhicule en particulier d'un véhicule automobile, le dispositif d'éclairage (10) comprenant au moins une source de lumière à semi-conducteur (18), en particulier une diode électroluminescente, et un appareil de commande (20) qui est réalisé pour le fonctionnement de la source de lumière à semi-conducteur (18) à l'aide d'un signal à modulation d'impulsions en largeur avec un taux d'impulsions (d) prescriptible entre la durée d'impulsion ($T_E$) et la durée de période (T) et pour le diagnostic temporaire de la source de lumière à semi-conducteur (18), et la source de lumière à semi-conducteur (18) étant alimentée pendant la durée entière du diagnostic en une pulsion ($T_{E0}$) du signal à modulation d'impulsions en largeur, **caractérisé en ce que** l'appareil de commande (20) est réalisé selon l'une quelconque des revendications 6 ou 7.

9. Dispositif d'éclairage (10) selon la revendication 8, **caractérisé en ce que** l'appareil de commande (20) est réalisé pour la mise en oeuvre d'un procédé selon l'une quelconque des revendications 2 à 5.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008047731 A1
- DE 102005051212 A1